(19) Europäisches Patentamt
European Patent Office
Office européen des brevets

(11) Veröffentlichungsnummer : **0 022 900**
**B1**

(12) # EUROPÄISCHE PATENTSCHRIFT

(45) Veröffentlichungstag der Patentschrift : **09.03.83**

(51) Int. Cl.³ : **B 27 K 3/50**, C 09 D 5/14, A 01 N 47/04

(21) Anmeldenummer : **80101694.0**

(22) Anmeldetag : **29.03.80**

(54) **Mittel zum Konservieren von Holzwerkstoffen sowie Verfahren zur Herstellung des Konservierungsmittels.**

(30) Priorität : **06.07.79 DE 2927349**

(43) Veröffentlichungstag der Anmeldung : **28.01.81 Patentblatt 81/04**

(45) Bekanntmachung des Hinweises auf die Patenterteilung : **09.03.83 Patentblatt 83/10**

(84) Benannte Vertragsstaaten : **AT BE CH DE FR GB IT LU NL SE**

(56) Entgegenhaltungen :
**EP A 0 010 635**
**DE A 2 655 330**
**DE B 1 238 139**
**FR A 2 355 451**
**US A 3 911 134**

(73) Patentinhaber : **DEUTSCHE SOLVAY-WERKE GMBH**
**Langhansstrasse 6**
**D-5650 Solingen 11 (DE)**

(72) Erfinder : **Metzner, Wolfgang, Dr. Dipl.-Chem.**
**Buschstrasse 151**
**D-4150 Krefeld (DE)**
Erfinder : **Koddebusch, Hubert, Dr. Dipl.-Chem.**
**Leibnitzstrasse 14**
**D-4130 Moers-Vinn (DE)**
Erfinder : **Poetter, Gerswid, Dr. Dipl.-Chem.**
**(verstorben)**
**(DE)**

(74) Vertreter : **Seiler, Siegfried**
**DEUTSCHE SOLVAY WERKE GmbH Langhansstrasse 6**
**D-5650 Solingen 11 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 022 900 B1

# Mittel zum Konservieren von Holzwerkstoffen sowie Verfahren zur Herstellung des Konservierungsmittels

Die vorliegende Erfindung betrifft ein Mittel zum Konservieren von Holz und Holzwerkstoffen, bestehend aus mehr als 65 Gew.%, vorzugsweise mehr als 72 Gew.%, mindestens eines schwerflüchtigen organischen Lösungsmittels mit einem Flammpunkt über 30 °C und 0,35 bis 10 Gew.%, vorzugsweise 1 bis 7 Gew.%, mindestens eines in dem Lösungsmittel löslichen oder teilweise löslichen Fungizides sowie ggf. 0,3 bis 7 Gew.%, vorzugsweise 0,5 bis 4 Gew.%, mindestens eines in dem Lösungsmittel löslichen Insektizides. Im Rahmen des erfindungsgemäßen Mittels zum Konservieren von Holz und Holzwerkstoffen werden als Fungizide solche auf der Basis von N,N-Dimethyl-N'-aryl-N'-(dichlorfluormethylthio)-sulfamid und N,N-Dimethyl-N'-arylalkyl-N'-(dichlorfluormethylthio)-sulfamid in bestimmten Gewichtsverhältnissen eingesetzt.

Es ist bereits bekannt, das N,N-Dimethyl-N'-phenyl-N'-(fluordichlormethylthio)-sulfamid als Fungizid in Holzkonservierungsmitteln einzusetzen (vgl. Zeitschrift « Holz als Roh- und Werkstoff » 35 (1977) 233-237). Leider treten bei der Anwendung von N,N-Dimethyl-N'-phenyl-N'-(fluordichlormethylthio)-sulfamid u. a. die Nachteile auf, die einerseits darin bestehen, daß sich N,N-Dimethyl-N'-phenyl-N'-(fluordichlormethylthio)-sulfamid in der üblichen Formulierung in aliphatischen und aromatischen Lösungsmitteln schlecht bzw. mäßig löst und weiterhin in Bezug auf einige andere Wirkstoffe größere Wirkstoffkonzentrationen erforderlich sind, um eine ausreichende fungizide Wirkung im Holz zu erhalten, daß jedoch auch andererseits der Wirkstoff nach dem Aufbringen auf das Holz teilweise in Form von feinen weißen Kristallen auf der Holzoberfläche auskristallisieren kann. Derartige Ausblühungen des Fungizides N,N-Dimethyl-N'-phenyl-N'-(fluordichlormethylthio)-sulfamid sollen verhindert werden, da dadurch ein Wirkungsverlust eintritt und die Holzoberfläche unansehnlich wird.

Weiterhin ist der Einsatz von N,N-Dimethyl-N'-p-tolyl-N'-(dichlorfluormethylthio)-sulfamid als Fungizid, insbesondere auf dem Sektor Pflanzenschutz, bekannt. N,N-Dimethyl-N'-p-tolyl-N'-(dichlorfluormethylthio)-sulfamid hat gegenüber N,N-Dimethyl-N'-phenyl-N'-(fluordichlormethylthio)-sulfamid den Vorteil, daß es etwas besser in einigen organischen Lösungsmitteln löslich ist. Verwendet man jedoch N,N-Dimethyl-N'-p-tolyl-N'-(dichlorfluormethylthio)-sulfamid in üblichen Formulierungsmitteln als Holzkonservierungsmittel so kann ebenfalls, insbesondere bei der Konzentration über 1 %, eine Kristallbildung bzw. -ausblühung aus N-N-Dimethyl-N'-phenyl-(N'-fluordichlormethylthio)-sulfamid auf der Holzoberfläche erfolgen, die die Holzoberfläche unansehnlich macht und einen Wirkstoffverlust im Holz bewirkt.

Verwendet man in Holzkonservierungsmitteln als Fungizid das N,N-Dimethyl-N'-phenyl-(N'-fluordichlormethylthio)-sulfamid oder das N,N-Dimethyl-N'-p-tolyl-N'-(dichlorfluormethylthio)-sulfamid und ein in dem Lösungsmittel lösliches Bindemittel, z. B. Alkydharze oder Leinöl, so tritt nach dem Aufbringen des Holzschutzanstriches, insbesondere der Holzschutzlasur oder des Holzimprägnier-Grundiermittels die Erscheinung auf, daß das N,N-Dimethyl-N'-phenyl-(N'-fluordichlormethylthio)-sulfamid oder das N,N-Dimethyl-N'-p-tolyl-N'-(dichlorfluormethylthio)-sulfamid auf der Filmoberfläche oder im Anstrichfilm selbst als weißlicher Belag bzw. milchige Trübung erscheint. Diese Erscheinung kann u. a. erst nach einigen Wochen bzw. Monaten eintreten und führt einerseits zu einer Wirkungsminderung des Holzkonservierungsmittels, insbesondere einer Wirkungsminderung der fungiziden Wirkung des Holzkonservierungsmittels, andererseits zu einer Beeinträchtigung der Oberfläche des Anstriches bzw. des Holzes und mindert somit den dekorativen Effekt der behandelten Holzoberfläche.

Die aufgetretenen Ausblühungen, Trübungen und dgl. lassen sich durch Abwaschen schwer entfernen und werden bei dem Versuch des Abreibens häufig (wahrscheinlich als Kristallkeime) auf der Oberfläche verteilt, was bei dem Versuch des Abreibens häufig zu einer Verstärkung des « Ausblüheffektes » führen kann.

Diese « Ausblüheffekte » treten vor allem bei Konzentrationen von N,N-Dimethyl-N'-phenyl-N'-(fluordichlormethylthio)-sulfamid oder N,N-Dimethyl-N'-p-tolyl-N'-(dichlorfluormethylthio)-sulfamid über 1 % (bezogen auf das Holzkonservierungsmittel) auf ; sind jedoch je nach Zusammensetzung, verwendetem Lösungsmittel, Verarbeitungs- und/oder Verwendungstemperatur, Holzart und dgl. auch bei Konzentrationen unter 1 % von N,N-Dimethyl-N'-phenyl-N'-(fluordichlormethylthio)-sulfamid oder N,N-Dimethyl-N'-p-tolyl-N'-(dichlorfluormethylthio)-sulfamid zu beobachten.

Ziel und Aufgabe der vorliegenden Erfindung war es daher, ein Holzkonservierungsmittel zu finden, das die vorgenannten Nachteile, insbesondere der Kristallausblühung und der damit verbundenen Wirkungsverminderung und der dadurch unansehnlichen Holzoberfläche, nicht aufweist. Da viele Fungizide in der Formulierung als Holzkonservierungsmittel nicht lagerbeständig sind oder in der Formulierung mit Kunstharzen, bestimmten Lösungsmitteln oder bei der Trocknung der Anstriche ihre Wirkung teilweise verlieren, bestand das Ziel, innerhalb des Holzkonservierungsmittels als Fungizid eines der wirksamen Fungizide auf der Basis von N,N-Dimethyl-N'-phenyl-(N'-fluordichlormethylthio)-sulfamid oder N,N-Dimethyl-N'-p-tolyl-N'-(dichlorfluormethylthio)-sulfamid einzusetzen, weil diese Fungizide die vorgenannten Nachteile (z. B. Lagerunbeständigkeit) nicht aufweisen und nach den uns vorliegenden Versuchen hygienisch weitgehend unbedenklich sind.

Erfindungsgemäß wurde festgestellt, daß diesen Zielen und Aufgaben ein Mittel zum Konservieren von Holz und Holzwerkstoffen gerecht wird, bestehend aus mehr als 65 Gew.%, vorzugsweise mehr als 72

Gew.%, mindestens eines schwerflüchtigen organischen Lösungsmittels mit einem Flammpunkt über 30 °C und 0,35 bis 10 Gew.%, vorzugsweise 1 bis 7 Gew.%, mindestens eines in dem Lösungsmittel löslichen oder teilweise löslichen Fungizides sowie ggf. 0,1 bis 7 Gew.%, vorzugsweise 0,3 bis 3 Gew.%, mindestens eines in dem Lösungsmittel löslichen Insektizides, wobei das Fungizid aus einer Kombination von N,N-Dimethyl-N'-phenyl-N'-(fluordichlormethylthio)-sulfamid und N,N-Dimethyl-N'-p-tolyl-N'-(dichlorfluormethylthio)-sulfamid im Gewichtsverhältnis 25 : 10 bis 10 : 30, vorzugsweise 15 : 10 bis 10 : 15, besteht.

Da sich die Wirkstoffe N,N-Dimethyl-N'-phenyl-(N'-fluordichlormethylthio)-sulfamid und N,N-Dimethyl-N'-p-tolyl-N'-(dichlorfluormethylthio)-sulfamid in der Strukturformel lediglich durch eine Methylgruppe unterscheiden, mußte davon ausgegangen werden, daß die Fungizide Mischkristalle bilden können, die auch bei ihrer Kombination die Löslichkeit der Substanzen nicht verbessern. Umso erstaunlicher war bei den Versuchen die Feststellung, daß sich innerhalb des vorgenannten Mischungsverhältnisses und der genannten Gewichtsverhältnisse des Fungizides im Holzschutzmittel keine Ausblüheffekte oder bei ungünstigen Verhältnissen stark verminderte Kristallausblühungen ergeben. Die Holzschutzmittel, die in den genannten Gewichtsverhältnissen auf der Basis der fungiziden Wirkstoffkombinationen hergestellt werden, sind auch bei einem geringen Anteil an Weichmachern, organischen Bindemitteln oder Fixierungsmitteln einsetzbar.

Nach einer bevorzugten Ausführungsform sind 0,5 bis 23 Gew.%, vorzugsweise 2 bis 15 Gew.%, des organischen schwerflüchtigen Lösungsmittels bzw. Lösungsmittelgemisches mit einem Flammpunkt oberhalb 30 °C durch die gleiche Menge eines oder mehrerer organischer Bindemittel und/oder Fixierungsmittel ersetzt, wobei solche eingesetzt werden, die in dem Lösungsmittel bzw. Lösungsmittelgemisch verteilbar bzw. emulgierbar, vorzugsweise jedoch löslich sind, wobei der Ersatz mit der Maßgabe erfolgt, daß die erhaltene Mischung bzw. das erhaltene Lösungsmittelgemisch ebenfalls einen Flammpunkt über 30 °C aufweist und das organische Lösungsmittel bzw. Lösungsmittelgemisch ein öliges oder ölartiges Lösungsmittel ist.

Nach einer anderen bevorzugten Ausführungsform sind 0,05 bis 6 Gew.%, vorzugsweise 0,1 bis 4 Gew.%, des Lösungsmittels bzw. Lösungsmittelgemisches, vorzugsweise des öligen oder ölartigen Lösungsmittels bzw. Lösungsmittelgemisches, durch die gleiche Menge eines oder mehrerer in dem Lösungsmittel bzw. Lösungsmittelgemisch öllösliche Farbstoffe und/oder durch Bitumen und/oder in Wasser und/oder dem Lösungsmittel oder Lösungsmittelgemisch unlösliche anorganische und/oder in Wasser und/oder dem Lösungsmittel bzw. Lösungsmittelgemisch organische Farbpigmente ersetzt. Nach dieser Ausführungsform können farbige Holzschutzanstrichmittel oder -lasuren erhalten werden.

Nach einer anderen Ausführungsform sind 0,1 bis 6 Gew.%, vorzugsweise 0,5 bis 3 Gew.%, des schwerflüchtigen, öligen oder ölartigen, Lösungsmittels durch die gleiche Menge eines leicht- oder mittelflüchtigen Lösungsmittels bzw. Lösungsmittelgemisches, das in dem öligen oder ölartigen Lösungsmittel löslich ist, ersetzt, mit der Maßgabe, daß die erhaltene Mischung bzw. das erhaltene Lösungsmittelgemisch ebenfalls einen Flammpunkt über 30 °C aufweist. Vorzugsweise werden in diesem Zusammenhang hydrophile Lösungsmittel verwendet, vorzugsweise aliphatische und/oder aromatische Alkohole, Ketone oder Alkylglykoläther bzw. Alkylglykolester.

Nach einer weiteren Ausführungsform wird das N,N-Dimethyl-N'-phenyl(N'-fluordichlormethylthio)-sulfamid und N,N-Dimethyl-N'-p-tolyl-N'-(dichlorfluormethylthio)-sulfamid bestehende Fungizid bis zu 65 Gew.%, vorzugsweise bis zu 40 Gew.%, bezogen auf die gesamte Menge des aus N,N-Dimethyl-N'-phenyl-(N'-fluordichlormethylthio)-sulfamid und N,N-Dimethyl-N'-p-tolyl-N'-(dichlorfluormethylthio)-sulfamid bestehenden Fungizidgemisches durch ein oder mehrere andere in dem Lösungsmittel lösliche organische Fungizide ersetzt.

Geeignete Fungizide zum Einsatz in dem erfindungsgemäßen Fungizidgemisch sind z. B. fungizide öllösliche Naphthenate, vorzugsweise Zink- und/oder Kupfernaphthenate ; 8-Oxychinolin bzw. dessen fungizide öllösliche Salze oder Derivate, vorzugsweise Phenylquecksilber-8-oxychinolat ; fungizide Verbindungen bzw. Derivate oder Gemische von Chlorphenolen, vorzugsweise Verbindungen oder Gemische von Penta- und/oder Tetrachlorphenol mit schwerflüchtigen Aminen, z. B. Rosinamin ; Nitrophenole bzw. Nitrochlorphenole und/oder Nitrochlorbenzole, insbesondere 1,2-Dinitrotetrachlorbenzol und/oder Benzimidazol-2-carbamidsäuremethylester und/oder öllösliche fungizid wirksame metallhaltige organische Verbindungen, z. B. von Kupfer, Zink, Mangan, Kobalt, Chrom oder Quecksilber, z. B. in Form von Caprylaten, Naphthenaten, Oleaten und dgl. ; fungizide Salze des N-Nitroso-N-cyclohexylhydroxylamins, vorzugsweise des Aluminiumsalzes des N-Nitroso-N-cyclohexylhydroxylamins und/oder N-Trichlormethylthiotetrahydrophthalimid.

Weitere einzusetzende Fungizide sind auch öllösliche tetravalente Fungizide, zinnorganische Verbindungen, z. B. Bis-(tri-butylzinn)oxid, Tri-n-butylzinntrichlorazetat, Tri-n-butylzinn-8-oxychinolin, Tri-n-butylzinnpentachlorphenol, Tri-n-butyl-zinnbisäthylendithiocarbamat, Tri-n-butylzinnbenzoylcyanoessigsäure, Tri-n-butylzinnfluorid, Tri-n-butylzinnrhodanid, Tri-butylzinndichlorphenolat sowie das Addukt Tri-n-butylzinnacrylat/Hexachlorcyclopentadien.

Schließlich erweisen sich Kombinationen mit dem erfindungsgemäßen Fungizidgemisch mit Zinkpropylen-1,2-bis-dithio-carbamidat, Dimethyl-(2,2,2-trichloro-1-hydroxyäthyl)-phosphonat, 0,0-dimethyl-S-(4-oxo-1,2,3-benzotriazin-3 (4 H)-ylmethyl)-phosphorodithiat, 0,0-diäthyl-0-p-nitrophenyl-phosphorothioat und/oder 6-methyl-2,3-quinoxaline als gut wirksam.

Ferner kann das erfindungsgemäße Fungizidgemisch in Kombination mit N-(1,1,2,2-Tetrachloro-2-fluoroäthylthio)-methansulfonanilid, 1,1-Dimethyl-3-(3,4-dichlorphenyl)-harnstoff und/oder Tetramethylthiouramdisulfid und/oder N-Cyclohexyl-N-methoxy-2,5-dimethyl-3-furamid verwendet werden.

Ferner können in Kombination mit dem Fungizidgemisch organische Phosphorsäureester der allgemeinen Formel

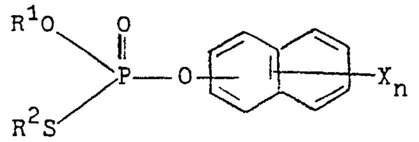

worin $R^1$ ein Aklyplgruppe mit 1 bis 4 Kohlenstoffatomen, $R^2$ eine gesättigte oder ungesättigte Alkylgruppe mit 1 bis 4 Kohlenstoffatomen oder eine Gruppeatomen oder eine Gruppe der Formel

$$R^3—O—CH_2—CH_2—$$

in der $R^3$ eine Alkylgruppe mit 1 bis 4 Kohlenstoffatomen bedeutet, X ein Wasserstoff- oder ein Halogenatom und n 1, 2 oder 3 bedeuten und/oder

N-(Dimethylaminomethyliden)-thiol(thiono)-phosphorsäure-esterimide der Formel

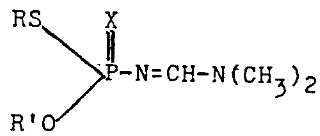

in welcher X für ein Sauerstoff- oder Schwefelatom steht, R' einen Alkylrest mit 1 bis 6 Kohlenstoffatomen und R einen Alkyl-, Alkenyl-, Alkinyl-, Aralkyl-, Alkylthioalkyl- oder Alkenylthialkylrest bedeutet, und/oder

5-Imino-1,2,4-triazin-Derivate der allgemeinen Formel I

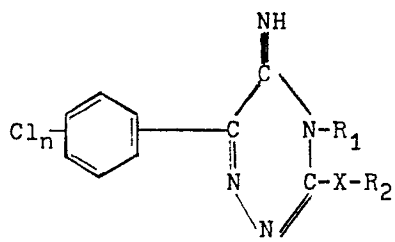

in der n für 0 oder 1, $R_1$ für Alkyl mit 1 bis 4 C-Atomen oder Amino, $R_2$ für Alkyl mit 1 bis 4 C-Atomen und X für Sauerstoff, Schwefel oder die Gruppe —NH— steht, Verwendung finden.

Als hydrophile Lösungsmittel werden zweckmäßig solche Lösungsmittel eingesetzt, die einem Flammpunkt oberhalb 30 °C und eine Verdunstungszahl über 35 haben; vorzugsweise werden entsprechende aliphatische und/oder aromatische Alkohole, Ketone oder Alkylglykoläther und/oder Alkylglykolester, beispielsweise Alkylglykolacetat, verwendet.

Die Erfindung betrifft weiterhin ein Verfahren zum Konservieren von Holz und Holzwerkstoffen unter Verwendung eines Mittels bestehend aus mehr als 65 Gew.%, vorzugsweise mehr als 72 Gew.%, mindestens eines schwerflüchtigen, organischen Lösungsmittels mit einem Flammpunkt über 30 °C und 0,35 bis 10 Gew.%, vorzugsweise 1 bis 7 Gew.%, mindestens eines in dem Lösungsmittel löslichen oder teilweise löslichen Fungizides sowie ggf. 0,1 bis 7 Gew.%, vorzugsweise 0,3 bis 3 Gew.%, mindestens eines in dem Lösungsmittel löslichen Insektizides. Im Rahmen des erfindungsgemäßen Verfahrens wird ein Fungizidgemisch aus N-N-Dimethyl-N'-phenyl-(N'-fluordichlormethylthio)-sulfamid und N,N-Dimethyl-N'-p-tolyl-N'-(dichlorfluormethylthio)-sulfamid im Gewichtsverhältnis 25 : 10 bis 10 : 30, vorzugsweise 15 : 10 bis 10 : 15, in dem Lösungsmittel bei Temperaturen von − 5 °C bis + 80 °C, vorzugsweise von + 20 °C bis + 40 °C und bei Drücken von 400 mm Hg bis 850 mm Hg, so lange behandelt, bis eine klare Lösung oder klar erscheinende Dispersion entsteht.

Beispiele

1. Holzschützendes Grundiermittel mit insektizider, fungizider und bläuewidriger Wirkung

| | |
|---|---|
| N,N-Dimethyl-N'-phenyl-(N'-fluordichlormethylthio)-sulfamid | 1,0 % |
| N,N-Dimethyl-N'-p-tolyl-N'-(dichlorfluormethylthio)-sulfamid | 1,0 % |
| Lindan intern. Kürzbezeichnung für das Insektizid γ-Hexachlorcyclohexan | 0,5 % |
| Leinölfirnis | 15,0 % |
| Alkydharz, 60 % | 5,0 % |
| Sikkative | 0,2 % |
| aromatische Lösungsmittel Siedebereich : 180-210 °C | 77,3 % |

2. Imprägniermittel mit insektizider und fungizider Wirksamkeit und bläuewidriger Wirkung

| | |
|---|---|
| Lindan | 0,5 % |
| N,N-Dimethyl-N'-phenyl-(N'-fluordichlormethylthio)-sulfamid | 0,7 % |
| N,N-Dimethyl-N'-p-tolyl-N'-(dichlorfluormethylthio)-sulfamid | 1,0 % |
| Dibutylphthalat | 6,0 % |
| Tributylphosphat | 2,0 % |
| Aromaten (Siedebereich 180-210 °C) | 39,8 % |
| Testbenzin (Siedebereich 180-210 °C) | 40,0 % |

3. Bekämpfungsmittel mit pilzwidriger Wirkung und bläuewidriger Wirkung

| | |
|---|---|
| Lindan | 1,0 % |
| N,N-Dimethyl-N'-phenyl-(N'-fluordichlormethylthio)-sulfamid | 0,6 % |
| N,N-Dimethyl-N'-p-tolyl-N'-(dichlorfluormethylthio)-sulfamid | 1,2 % |
| Dibutylphthalat | 8,0 % |
| aromatische Lösungsmittel (Siedebereich 180-210 °C) | 89,2 % |

4. Bläuewidriges Imprägniermittel und Grundiermittel mit insektizider Wirksamkeit

| | |
|---|---|
| Alkydharz-Lösung 60 % | 10,0 % |
| N,N-Dimethyl-N'-phenyl-(N'-fluordichlormethylthio)-sulfamid | 0,3 % |
| N,N-Dimethyl-N'-p-tolyl-N'-(dichlorfluormethylthio)-sulfamid | 0,4 % |
| Trockenstoff | 0,2 % |
| Lindan | 0,5 % |
| aromatische Lösungsmittel | 88,6 % |

5. Bläuewidriges Imprägniermittel mit insektizider und fungizider Wirksamkeit

| | |
|---|---|
| N,N-Dimethyl-N'-phenyl-(N'-fluordichlormethylthio)-sulfamid | 0,8 % |
| N,N-Dimethyl-N'-p-tolyl-N'-(dichlorfluormethylthio)-sulfamid | 0,9 % |
| Persulon (eingetragenes Wz der BAYER AG) | 0,3 % |
| Lindan | 0,5 % |
| Dibutylphthalat | 6,0 % |
| Tributylphosphat | 2,0 % |
| aromatische Lösungsmittel | 89,5 % |

6. Holzschützendes Lasuranstrichmittel mit bläuewidriger und fungizider sowie insektizider Wirksamkeit

| | |
|---|---|
| N,N-Dimethyl-N'-phenyl-(N'-fluordichlormethylthio)-sulfamid | 0,9 % |
| N-N-Dimethyl-N'-p-tolyl-N'-(dichlorfluormethylthio)-sulfamid | 0,9 % |
| Lindan | 0,5 % |
| Alkydharz (100 %) | 20,0 % |
| Pigmente (Eisenoxid, Ruß u. a.) | 2,0 % |
| Siccative | 0,2 % |
| Netzmittel, Hautverhütungsmittel | 0,3 % |
| Aromatische Kohlenwasserstoffe | 50,0 % |
| Testbenzin | 25,2 % |

7. Holzschutzmittel-Konzentrat zur Herstellung eines Imprägniermittels mit vorbeugender insektizider, fungizider und bläuewidriger Wirkung durch Verdünnen des Konzentrates im Verhältnis 1 : 2 mit aliphatischen und aromatischen Lösungsmitteln

| | |
|---|---|
| N,N-Dimethyl-N'-phenyl-(N'-fluordichlormethylthio)-sulfamid | 2,4 % |
| N,N-Dimethyl-N'-p-tolyl-N'-(dichlorfluormethylthio)-sulfamid | 2,7 % |
| Lindan | 1,5 % |
| Dibutylphthalat | 18,0 % |
| Tributylphosphat | 6,0 % |
| aromatische Lösungsmittel Siedebereich : 180-210 °C | 69,4 % |

**Ansprüche**

1. Mittel zum Konservieren von Holz und Holzwerkstoffen, bestehend aus mehr als
65, vorzugsweise
mehr als 72 Gew.%,
eines schwerflüchtigen organischen Lösungsmittels bzw. Lösungsmittelgemisch mit einem Flammpunkt über 30 °C und
0,35 bis 10 Gew.%, vorzugsweise
1 bis 7 Gew.%,
eines löslichen oder teilweise löslichen Fungizides sowie ggf.
0,1 bis 7 Gew.%, vorzugsweise
0,3 bis 3 Gew.%,
eines löslichen Insektizides, dadurch gekennzeichnet, daß das Fungizid aus einer Kombination aus N,N-Dimethyl-N'-phenyl-N'-(fluordichlormethylthio)-sulfamid und N,N-Dimethyl-N'-p-tolyl-N'-(dichlorfluormethylthio)-sulfamid im Gewichtsverhältnis
25 : 10 bis 10 : 30, vorzugsweise
15 : 10 bis 10 : 15,
besteht.

2. Mittel nach Anspruch 1, dadurch gekennzeichnet, daß
0,5 bis 23 Gew.%, vorzugsweise
2 bis 15 Gew.%,
des Lösungsmittels durch die gleiche Menge eines oder mehrerer organischer Bindemittel und/oder Fixierungsmittel ersetzt sind, wobei die Bindemittel und/oder Fixierungsmittel in dem Lösungsmittel verteilbar bzw. emulgierbar, vorzugsweise jedoch löslich sein sollen, mit der Maßgabe, daß das erhaltene Lösungsmittelgemisch ebenfalls einen Flammpunkt über 30 °C aufweist und das Lösungsmittel ölig oder ölartig ist.

3. Mittel nach Anspruch 1 oder 2, dadurch gekennzeichnet, daß
0,05 bis 6 Gew.%, vorzugsweise
0,1 bis 4 Gew.%,
des Lösungsmittels, vorzugsweise des öligen oder ölartigen Lösungsmittels, durch die gleiche Menge eines oder mehrerer löslicher Farbstoffe, durch Bitumen und/oder durch unlösliche anorganische oder organische Farbpigmente ersetzt sind.

4. Mittel nach Ansprüchen 1 bis 3, dadurch gekennzeichnet, daß
0,1 bis 6 Gew.%, vorzugsweise
0,5 bis 3 Gew.%,
des Lösungsmittels durch die gleiche Menge eines leicht-oder mittelflüchtigen Lösungsmittels, das löslich ist, ersetzt ist, mit der Maßgabe, daß das erhaltene Lösungsmittelgemisch ebenfalls einen Flammpunkt über 30 °C aufweist.

5. Mittel nach einem der Ansprüche 1 bis 4, dadurch gekennzeichnet, daß das aus N,N-Dimethyl-N'-phenyl-N'-(fluordichlormethylthio)-sulfamid und N,N-Dimethyl-N'-p-tolyl-N'-(dichlorfluormethylthio)-sulfamid bestehende Fungizid bis zu
65, vorzugsweise bis zu
40 Gew.%,
durch ein oder mehrere andere lösliche organische Fungizide ersetzt sind.

6. Verfahren zur Herstellung eines Konservierungsmittels für Holz und Holzwerkstoffe gemäß den Ansprüchen 1 bis 5, dadurch gekennzeichnet, daß ein Fungizidgemisch aus N,N-Dimethyl-N'-phenyl-N'-(fluordichlormethylthio)-sulfamid und N,N-Dimethyl-N'-p-tolyl-N'-(dichlorfluormethylthio)-sulfamid im Gewichtsverhältnis
25 : 10 bis 10 : 30, vorzugsweise
15 : 10 bis 10 : 15,
in dem Lösungsmittel bei Temperaturen von – 5 bis + 80 °C, vorzugsweise von + 20 bis + 40 °C und bei Drücken von 400 mm bis 850 mm Hg, vorzugsweise 650 mm bis 790 mm Hg, so lange behandelt wird, bis eine klare Lösung oder klar erscheinende Dispersion entsteht.

**Claims**

1. Agent for preserving wood and wood materials, consisting of more than

65, preferably
more than 72 %-wt.,
of a difficultly-volatilizable organic solvent or solvent mixture with a flashpoint over 30 °C and
0.35 to 10 %-wt., preferably
1 to 7 %-wt.,
of a soluble or partially soluble fungicide and also, if required,
0.1 to 7 %-wt., preferably
0.3 to 3 %-wt.,
of a soluble insecticide, characterized in that the fungicide consists of a combination of N,N-dimethyl-N'-phenyl-N'-(fluorodichloromethylthio)-sulphamide and N,N-dimethyl-N'-p-tolyl-N'-(dichlorofluoromethylthio)-sulphamide in the weight ratio
25 : 10 to 10 : 30, preferably
15 : 10 to 10 : 15.

2. Agent according to Claim 1, characterized in that
0.5 to 23 %-wt., preferably
2 to 15 %-wt.,
of the solvent is substituted by the same quantity of one or more organic binding agents and/or fixing agents, whereby the binding agents and/or fixing agents are dispersible or emulsifiable, but preferably soluble in the solvent, with the condition that the solvent mixture obtained likewise has a flashpoint over 30 °C and the solvent is oily or oil-like.

3. Agent according to Claim 1 or 2, characterized in that
0.05 to 6 %-wt., preferably
0.1 to 4 %-wt.,
of the solvent, preferably of the oily or oil-like solvent, is substituted by the same quantity of one or more soluble colorants, by bitumen and/or by insoluble inorganic or organic coloured pigments.

4. Agent according to Claims 1 to 3, characterized in that
0.1 to 6 %-wt., preferably
0.5 to 3 %-wt.,
of the solvent is substituted by the same quantity of a readily or moderately volatilizable solvent, which is soluble, with the condition that the solvent mixture obtained likewise has a flashpoint over 30 °C.

5. Agent according to one of Claims 1 to 4, characterized in that of the fungicide consisting of N,N-dimethyl-N'-phenyl-N'-(fluorodichloromethylthio)-sulphamide and N,N-dimethyl-N'-p-tolyl-N'-(dichlorofluoromethylthio)-sulphamide up to
65, preferably up to
40 %-wt.,
is substituted by one or more other soluble organic fungicides.

6. Process for the preparation of a preservating agent for wood and wood materials according to Claims 1 to 5, characterized in that a fungicide mixture of N,N-dimethyl-N'-phenyl-N'-(fluorodichloromethylthio)-sulphamide and N,N-dimethyl-N'-p-tolyl-N'-(dichlorofluoromethylthio)-sulphamide in the weight ratio
25 : 10 to 10 : 30, preferably
15 : 10 to 10 : 15,
is treated in the solvent at temperatures from − 5 to + 80 °C, preferably from + 20 to + 40 °C and at pressures from 400 mm to 850 mm Hg, preferably 650 mm to 790 mm Hg, until a clear solution or a dispersion of clear appearance results.

**Revendications**

1. Agent de conservation du bois et de matériaux en bois consistant en
plus de 65, de préférence
plus de 72 % en poids,
d'un solvant ou mélange de solvants organique peu volatil ayant un point d'éclair supérieur à 30 °C et
0,35 à 10 % en poids, de préférence
1 à 7 % en poids,
d'un fongicide soluble ou partiellement soluble, ainsi qu'éventuellement en
0,1 à 7 % en poids, de préférence
0,3 à 3 % en poids,
d'un insecticide soluble, caractérisé en ce que le fongicide consiste en une combinaison de N,N-diméthyl-N'-phényl-N'-(fluordichlorméthylthio)-sulfamide et de N,N-diméthyl-N'-p-tolyl-N'-(dichlorfluorméthylthio)-sulfamide dans un rapport pondéral compris entre
25 : 10 et 10 : 30, de préférence
15 : 10 et 10 : 15.

2. Agent suivant la revendication 1 caractérisé en ce que
0,5 à 23 % en poids, de préférence

2 à 15 % en poids,

du solvant sont remplacés par la même quantité d'un ou de plusieurs liant(s) et/ou fixateur(s) organique(s), les liants et/ou les fixateurs étant dispersables ou émulsifiables et de préférence solubles dans le solvant, le mélange de solvants résultant ayant un point d'éclair supérieur à 30 °C et le solvant étant huileux ou oléagineux.

3. Agent suivant la revendication 1 ou 2 caractérisé en ce que

0,05 à 6 % en poids, de préférence

0,1 à 4 % en poids,

du solvant, de préférence du solvant huileux ou oléagineux, sont remplacés par la même quantité d'un ou de plusieurs colorant(s) soluble(s), par du bitume et/ou par des pigments colorants inorganiques ou organiques insolubles.

4. Agent suivant les revendications 1 à 3 caractérisé en ce que

0,1 à 6 % en poids, de préférence

0,5 à 3 % en poids,

du solvant sont remplacés par la même quantité d'un solvant volatil ou moyennement volatil qui est soluble, le mélange de solvants résultant ayant un point d'éclair supérieur à 30 °C.

5. Agent suivant une des revendications 1 à 4 caractérisé en ce que le fongicide consistant en N,N-diméthyl-N'-phényl-N'-(fluordichlorméthylthio)-sulfamide et en N,N-diméthyl-N'-p-tolyl-N'-(dichlorfluorméthylthio)-sulfamide est remplacé jusqu'à concurrence de

65, de préférence

40 % en poids,

par un ou plusieurs autre(s) fongicide(s) organique(s) soluble(s).

6. Procédé pour la préparation d'un agent de conservation du bois et de matériaux en bois suivant les revendications 1 à 5, caractérisé en ce qu'un mélange fongicide consistant en N,N-diméthyl-N'-phényl-N'-(fluordichlorméthylthio)-sulfamide et en N,N-diméthyl-N'-p-tolyl-N'-(dichlorfluorméthylthio)-sulfamide dans un rapport pondéral compris entre

25 : 10 et 10 : 30, de préférence

15 : 10 et 10 : 15,

est traité dans le solvant à des températures de − 5 à + 80 °C, de préférence de + 20 à + 40 °C, et sous des pressions de 400 mm à 850 mm Hg, de préférence 650 mm à 790 mm Hg, pendant un temps suffisant pour former une solution claire ou une dispersion d'apparence claire.